# EUROPEAN PATENT APPLICATION

(11) **EP 4 665 005 A1**
(43) Date of publication of application: **17.12.2025**
(21) Application number: 23920368.0
(22) Date of filing: 07.02.2023
(51) Int. Cl.: H04W 52/02

(54) **COMMUNICATION METHOD AND APPARATUS, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2023/074852
(87) International publication number: WO 2024/164156

(57) **Abstract**

Provided in the present disclosure are a communication method and apparatus, and a readable storage medium. The method comprises: when a network device is in a discontinuous reception (DRX) state, starting from a start time of a sleep period of the DRX state or a first time before the start time, not sending first-type channel state information to a user equipment. In the method of the present disclosure, starting from the start time of the sleep period or the first time before the start time, the network device may not send the first-type channel state information to the user equipment, such that in a scenario where the network device is configured with DRX, the reception of some uplink information can be skipped and the sending of some downlink information can also be reduced, thereby further realizing power saving of the network device.

## Description

### TECHNICAL FIELD

The present disclosure relates to the technical field of wireless communication, in particular, to a communication method and apparatus, and a readable storage medium.

### BACKGROUND

Network energy saving is a potential topic in Release 18 (R18) of the 3GPP protocol, in which it was discussed how to save energy for the base station and the network. One possible way to save energy is the Discontinuous Reception (DRX) mechanism of the base station. In the DRX state, the base station does not need to monitor some uplink channels or uplink signals.

### SUMMARY

The present disclosure provides a communication method, apparatus, and readable storage medium.

In a first aspect, the present disclosure provides a communication method, performed by a network device, the method including:
when the network device is in a discontinuous reception (DRX) state, not sending a first type of channel state information (CSI) to a user equipment from a start time of an Off Duration of the DRX state or a first time prior to the start time.

In the method of the present disclosure, it is possible for the network device to not send the first type of the channel state information to the user equipment from the start time of the Off Duration or the first time prior to the start time, so that in the scenario where the network device is configured with the DRX, the reception of some uplink information can be skipped, and the sending of some downlink information can be saved, thereby further realizing the energy saving of the network device.

In some possible implementations, the start time is separated from the first time by a first duration, and the first duration is related to a measurement duration of a reference signal.

In some possible implementations, the first type of the channel state information is at least one of:
a channel-state-information reference signal (CSI-RS);
a channel-state-information interference measurement (CSI-IM) resource;
a tracking reference signal (TRS);
a CSI-RS associated with a periodic CSI measurement report;
a CSI-IM resource associated with the periodic CSI measurement report;
a CSI-RS associated with a semi-persistent CSI measurement report; and
a CSI-IM resource associated with the semi-persistent CSI measurement report.

In some possible implementations, the method further includes:
sending a second type of CSI to the user equipment after an end time of the Off Duration or after a second time prior to the end time, where the second type of the CSI is a part or all of the first type of the channel state information.

In some possible implementations, the end time is separated from the second time by a second duration, and the second duration is related to a measurement duration of a reference signal.

In some possible implementations, when the first type of the channel state information includes a CSI-RS associated with a semi-persistent CSI measurement report and/or a CSI-IM resource associated with the semi-persistent CSI measurement report, the second type of the CSI does not include at least one of:
a CSI-RS associated with the semi-persistent CSI measurement report and unassociated with a periodic CSI measurement report;
a CSI-IM resource associated with the semi-persistent CSI measurement report and unassociated with the periodic CSI measurement report.

In a second aspect, the present disclosure provides a communication method, performed by a user equipment, the method including:
not receiving a first type of channel state information (CSI) from a start time of an Off Duration of a network device in a DRX state or a first time prior to the start time.

In the method of the present disclosure, it is possible for the user equipment to not receive the first type of the channel state information from the start time of the Off Duration of the network device in the DRX state or the first time prior to the start time, thereby facilitating the energy saving of the user equipment.

In some possible implementations, the start time is separated from the first time by a first duration, and the first duration is related to a measurement duration of a reference signal.

In some possible implementations, the first type of the channel state information is at least one of:
a CSI-RS;
a CSI-IM resource;
a TRS;
a CSI-RS associated with a periodic CSI measurement report;
a CSI-IM resource associated with the periodic CSI measurement report;
a CSI-RS associated with a semi-persistent CSI measurement report; and
a CSI-IM resource associated with the semi-persistent CSI measurement report.

In some possible implementations, the method further includes:
receiving a second type of CSI sent by the network device after an end time of the Off Duration or after a second time prior to the end time, where the second type of the CSI is a part or all of the first type of the channel state information.

In some possible implementations, the end time is separated from the second time by a second duration, and the second duration is related to a measurement duration of a reference signal.

In some possible implementations, when the first type of the channel state information includes a CSI-RS associated with a semi-persistent CSI measurement report and/or a CSI-IM resource associated with the semi-persistent CSI measurement report, the second type of the CSI does not include at least one of:
a CSI-RS associated with the semi-persistent CSI measurement report and unassociated with a periodic CSI measurement report;
a CSI-IM resource associated with the semi-persistent CSI measurement report and unassociated with the periodic CSI measurement report.

In a third aspect, the present disclosure provides a network device. The network device includes a transceiver module, where the transceiver module may be configured to support a communication apparatus for communication.

When executing the steps described above in the first aspect, the transceiver module is configured to, when the network device is in a discontinuous reception (DRX) state, not send a first type of channel state information to a user equipment from a start time of an Off Duration of the DRX state or a first time prior to the start time.

In a fourth aspect, the present disclosure provides a user equipment, which includes a transceiver module, where the transceiver module may be configured to support the communication apparatus for communication.

When executing the steps described above in the second aspect, the transceiver module is configured to not receive a first type of channel state information from a start time of an Off Duration of a network device in a DRX state or a first time prior to the start time.

In a fifth aspect, the present disclosure provides a communication apparatus including a processor and a memory. The memory is configured to store a computer program. The processor is configured to execute the computer program to realize the design of the first aspect or any possible design of the first aspect.

In a sixth aspect, the present disclosure provides a communication apparatus including a processor and a memory. The memory is configured to store a computer program. The processor is configured to execute the computer program to realize the design of the second aspect or any possible design of the second aspect.

In a seventh aspect, the present disclosure provides a computer-readable storage medium, in which an instruction (or a computer program, a program) is stored, which, when called for execution on a computer, causes the computer to execute the above design of the first aspect or any possible design of the first aspect.

In an eighth aspect, the present disclosure provides a computer-readable storage medium, in which an instruction (or a computer program, a program) is stored, which, when called for execution on a computer, causes the computer to execute the above design of the second aspect or any possible design of the second aspect.

In a ninth aspect, the present disclosure provides a communication system including a network device for performing the method of the above first aspect and a user equipment for performing the method of the above third aspect.

It should be understood that the above general description and the detailed descriptions that follow are merely exemplary and explanatory and do not limit the present disclosure.

### BRIEF DESCRIPTION OF THE DRAWINGS

The accompanying drawings described herein are used to provide a further understanding of the embodiments of the present disclosure and constitute a part of the present application. The schematic embodiments of the embodiments of the present disclosure and the descriptions thereof are used to explain the embodiments of the present disclosure and do not constitute undue limitations on the embodiments of the present disclosure. In the accompanying drawings:

The accompanying drawings, which are incorporated into and constitute a part of the specification, illustrate embodiments consistent with the embodiments of the disclosure and, together with the specification, serve to explain the principles of the embodiments of the present disclosure.
FIG. 1 is a schematic diagram of a wireless communication system architecture provided by an embodiment of the present disclosure;
FIG. 2 is a flowchart of a communication method provided by an embodiment of the present disclosure;
FIG. 3 is a schematic diagram of a DRX cycle provided by an embodiment of the present disclosure;
FIG. 4 is a flowchart of another communication method provided by an embodiment of the present disclosure;
FIG. 5 is a structural diagram of a network device provided by an embodiment of the present disclosure;
FIG. 6 is a structural diagram of a user equipment provided by an embodiment of the present disclosure.

### DETAILED DESCRIPTION

The embodiments of the present disclosure will now be further described with reference to the accompanying drawings and specific embodiments.

Exemplary embodiments will be described herein in detail, examples of which are represented in the accompanying drawings. When the following description relates to the accompanying drawings, the same numerals in different drawings indicate the same or similar elements unless otherwise indicated. The implementations described in the following exemplary embodiments do not represent all implementations consistent with the embodiments of the present disclosure. Rather, they are only examples of apparatuses and methods consistent with some aspects of the present disclosure as detailed in the appended claims.

Terms used in the embodiments of the present disclosure are for the purpose of describing particular embodiments and are not intended to limit the embodiments of the present disclosure. The singular forms "a/an" and "the" as used in the embodiments of the present disclosure and the appended claims are also intended to encompass the plural form, unless the context clearly indicates otherwise. It should also be understood that the term "and/or" as used herein refers to and encompasses any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, first information may also be referred to as second information, and similarly, the second information may also be referred to as the first information. Depending on the context, the words "if" and "in case" as used herein may be interpreted as "when ..." or "upon ..." or "in response to determination".

The embodiments of the present disclosure are described in detail below, and examples of the embodiments are illustrated in the accompanying drawings, where the same or similar symbols throughout indicate the same or similar elements. The embodiments described below by reference to the accompanying drawings are exemplary and are intended to be used to explain the present disclosure and are not to be construed as a limitation of the present disclosure.

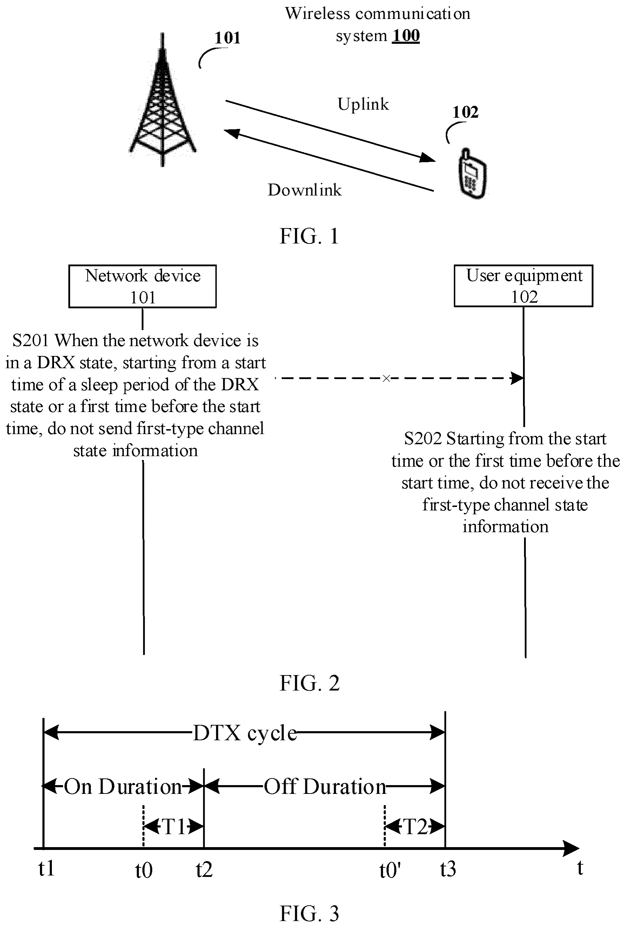

As shown in FIG. 1, a method for sending and receiving downlink information provided by the embodiment of the present disclosure may be applied to a wireless communication system 100, which may include a network device 101 and a user equipment 102. The user equipment 102 is configured to support carrier aggregation and may be connected to a plurality of component carriers of the network device 101, including a primary component carrier and one or more secondary component carriers.

It should be understood that the above wireless communication system 100 may be applied to both low frequency scenarios and high frequency scenarios. The application scenarios of the wireless communication system 100 include, but are not limited to, a long term evolution (LTE) system, an LTE frequency division duplex (FDD) system, an LTE time division duplex (TDD) system, a worldwide interoperability for micro wave access (WIMAX) communication system, a cloud radio access network (CRAN) system, a future fifth-generation (5G) system, a new radio (NR) communication system or a future evolved public land mobile network (PLMN) system, etc.

The user equipment 102 shown above may be a terminal, an access terminal, a terminal unit, a terminal station, a mobile station (MS), a remote station, a remote terminal, a mobile terminal, a wireless communication device, a terminal agent, or a terminal device. The user equipment 102 may have a wireless transceiver function, which is capable of communicating (e.g., wirelessly) with one or more network devices of one or more communication systems and receiving network services provided by the network devices. The network device herein includes, but is not limited to, the illustrated network device 101.

The user equipment (UE) 101 may be a cellular phone, a cordless phone, a session initiation protocol (SIP) phone, a wireless local loop (WLL) station, a personal digital assistant (PDA) device, a handheld device with wireless communication capabilities, a computing device or other processing device connected to a wireless modem, an in-vehicle device, a wearable device, a terminal device in future 5G networks or a terminal device in future evolved PLMN networks, and so on.

The network device 101 may be an access network device (or an access network site). The access network device refers to a device that has the function of providing network access, such as a radio access network (RAN) base station and the like. The network device 101 may specifically include a base station (BS), or include a base station and a wireless resource management device for controlling the base station, and the like. The network device 101 may also include a relay station (a relay device), an access point, and a base station in a future 5G network, a base station in a future evolved PLMN network, or an NR base station, and the like. The network device 101 may be a wearable device or an in-vehicle device. The network device 101 may also be a communication chip having a communication module.

For example, the network device 101 includes, but is not limited to, a next-generation base station (gnodeB, gNB) in 5G, an evolved node B (eNB) in an LTE system, a radio network controller (RNC), a node B (NB) in a WCDMA system, a radio controller in a CRAN system, a base station controller (BSC), a base transceiver station (BTS) in a GSM system or a CDMA system, a home base station (e.g., home evolved nodeB, or home node B, HNB), a baseband unit (BBU), a transmitting and receiving point (TRP), a transmitting point (TP), or a mobile switching center, and the like.

The embodiments of the present disclosure provide a communication method. Referring to FIG. 2, FIG. 2 is a communication method illustrated according to one exemplary embodiment. As shown in FIG. 2, the method includes steps S201 to S202, which are specifically as follows.

In step S201, when the network device 101 is in a discontinuous reception (DRX), the network device 101 does not send a first type of channel state information to the user equipment 102 from a start time of an Off Duration of the DRX state or a first time prior to the start time.

In some possible implementations, the network device 101 includes a dormant period (Off Duration) in the DRX state. For example, referring to FIG. 3, one DRX cycle may include an operating period (On Duration) and an Off Duration. During the Off Duration, the network device 101 may skip receiving some of the uplink information. During the On Duration, the network device 101 monitors the uplink information normally.

In some possible implementations, the network device 101 may send configuration information of the DRX to the user equipment 102 by way of static or semi-static configuration. Therefore, the user equipment 101 can be informed of the information of the Off Duration of the network device 101 in the DRX state.

In some possible implementations, the network device 101 may send information of the Off Duration of the DRX state to the user equipment 102 by way of a dynamic indication, such as an indication of a start time and an end time of the Off Duration.

In some possible implementations, referring to FIG. 3, the start time of the Off Duration is t2, and the first time prior to the start time t2 is t0.

In one example, referring to FIG. 3, the start time of the Off Duration is t2. The network device 101 does not send the first type of the channel state information to the user equipment 101 from the start time t2, for example, stopping or terminating sending the first type of the channel state information.

In one example, the first time prior to the start time is t0, and the network device 101 does not send the first type of the channel state information to the user equipment 101 from the time t0, that is, in this example, the network device 101 may stop sending the first type of the channel state information in advance prior to the Off Duration to realize effective energy saving.

In some possible implementations, it is possible for the network device 101 to not receive the measurement result or measurement report of the user equipment 102 during the Off Duration.

For example, it is possible for the network device 101 to not receive a CSI measurement report (CSI report) during the Off Duration. The CSI measurement report is determined by the user equipment 102 measuring a related CSI reference signal or resource, such as the first type of the CSI, and is reported to the network device 101. In this implementation, the network device 101 does not need to receive the CSI measurement report during the Off Duration, and therefore does not need to send the first type of the CSI.

In some possible implementations, the first type of the channel state information is at least one of the following:
a Channel-State-Information Reference Signal (CSI-RS);
a Channel-State-Information Interference Measurement Resource (CSI-IM-Resource);
a Tracking Reference Signal (TRS);
a CSI-RS associated with a periodic CSI measurement report;
a CSI-IM resource associated with the periodic CSI measurement report;
a CSI-RS associated with a semi-persistent CSI measurement report; and
a CSI-IM resource associated with the semi-persistent CSI measurement report.

In one example, the network device 101 may configure the CSI resource for the user equipment 102, and the user equipment 102 performs a CSI measurement according to the CSI resource to obtain a CSI measurement report.

Each CSI measurement report needs to be associated with the corresponding CSI resource for measurement, that is, the CSI measurement report is obtained by the user equipment 102 by measuring the CSI-RS associated with the CSI measurement report, or the CSI measurement report is obtained by the user equipment 102 by measuring the CSI-IM resource associated with the CSI measurement report, or the CSI measurement report is obtained by the user equipment 102 by measuring the CSI-RS and CSI-IM resource associated with the CSI measurement report.

It is worth noting that this example does not distinguish whether the CSI-RS or CSI-IM associated with the CSI measurement report is periodic or semi-persistent.

In one example, the TRS is a type of the CSI-RS, and the TRS includes a periodic TRS, a semi-persistent TRS and an aperiodic TRS. For the measurement of the periodic TRS and the semi-persistent TRS, there is no associated CSI measurement report, that is, the user equipment 102 will not send the CSI measurement report associated with the periodic TRS and the semi-persistent TRS. For the measurement of the aperiodic TRS, the user equipment 102 reports a CSI measurement report to the network device 102, but this CSI measurement report is null and does not contain any information.

It can be understood that the CSI-RS associated with the CSI measurement report in the aforementioned embodiment does not include the periodic TRS and the semi-persistent TRS, but may include the aperiodic TRS.

In an example, according to the reporting manner of reporting the CSI measurement report by the user equipment 101, the CSI measurement report may include the following three types.

The periodic CSI measurement report: the network device 101 may issue the configuration of the CSI measurement report through high-level signaling, and the user equipment 102 periodically reports the CSI measurement report according to the configuration of the network device 102.

The semi-persistent CSI measurement report: the network device 101 may issue the configuration of the CSI measurement report, and may activate and deactivate the configuration of the CSI measurement report through Downlink Control Information (DCI) or a Media Access Control Control Element (MAC CE) signaling. In the activated state, the user equipment 102 reports the CSI measurement report according to the configuration of the CSI measurement report; in the deactivated state, the configuration of the CSI measurement report is invalid.

The aperiodic CSI measurement report: the network device 101 dynamically schedules the CSI measurement report through the DCI, that is, when receiving a scheduling of the network device 101, the user equipment 102 reports the aperiodic CSI measurement report.

In some possible implementations, the network device 101 does not receive the CSI measurement report during the Off Duration, and the user equipment 102 does not send the CSI measurement report, so the network device 101 does not need to send the CSI-RS or CSI-IM resource associated with the CSI measurement report.

It is worth noting that, according to the definition of relevant protocols, when obtaining the measurement result or measurement report of each Reference Signal (RS), it is necessary to meet a measurement duration, and the user equipment 101 measures RS sampling points within the measurement duration to obtain the measurement result or measurement report.

In an example, referring to FIG. 3, the network device 101 does not send the first type of the CSI, such as the CSI-RS and/or CSI-IM resource, from the start time t2 of the Off Duration.

In an example, referring to FIG. 3, the network device 101 does not send the first type of the CSI, such as the CSI-RS and/or CSI-IM resource, from the first time t0 prior to the start time t2 by the first duration T1.

In this example, a DRX mechanism suitable for the network device 101 is a scenario configured semi-statically or indicated dynamically. In the scenario where the DRX mechanism is semi-statically configured, the network device 101 may inform the user equipment 102 of the configuration information of DRX through signaling, so that both the network device 101 and the user equipment 102 can know the start time and end time of the DRX cycle in advance, such as the start time t2 and the end time t3 of the Off Duration. Based on this, it is possible for the network device 101 to not send the CSI-RS and/or CSI-IM resource in advance prior to the start time t2.

It can be understood that the user equipment 102 does not need to send the CSI measurement report after the network device 101 enters the Off Duration of the DRX state. The CSI measurement report is obtained by the user equipment 102 through a period of the CSI measurement prior to a moment of sending the CSI measurement report.

In some possible implementations, the start time is separated from the first time by a first duration, and the first duration is related to a measurement duration of a reference signal.

For example, the first duration T1 adopts the measurement duration corresponding to the CSI measurement defined in the protocol.

In an example, as shown in conjunction with FIG. 3, for example, the sending moment of a certain CSI measurement report of the user equipment 102 is at the start time t2 or after t2.

In this example, taking the sending moment at t2 as an example, the CSI measurement report is obtained by the user equipment 102 performing the CSI measurement with a first duration T1 prior to t2, and a sampling duration or a number of sampling points required for the measurement may have been reached at t2. However, after the network device 101 enters the Off Duration, the user equipment 102 does not need to send the CSI measurement report, so the CSI measurement process prior to t2 may not be performed. Therefore, the network device 101 does not need to send the CSI-RS and/or CSI-IM-resource required for the CSI measurement within the first duration T1 prior to t2, that is, the network device 101 does not send the first type of the CSI from t0 which is separated by the first duration T1 prior to t2.

Combined with this example, for the CSI measurement report with the sending moment after t2, the requirement of the sampling duration or the number of sampling points may not be met at t2, and the network device 101 does not need to send the CSI-RS and/or CSI-IM-resource associated with the CSI measurement report.

In one possible example, for the CSI measurement report configured or indicated to be sent on slot n, i.e., the sending moment of the CSI measurement report is configured or indicated to be on slot n, assuming that slot n is within the Off Duration of DRX, the network device 101 may stop sending the CSI-RS and/or CSI-IM resource associated with the CSI measurement report from the time (slot n-T1) prior to slot n by the first duration T1. (slot n-T1) is not within the DRX Off Duration, but prior to the Off Duration.

In step S202, the user equipment 102 does not receive the first type of the channel state information from the start time of the Off Duration of the network device 101 in the DRX state or the first time prior to the start time.

In the embodiment of the present disclosure, it is possible for the network device 101 to not send the first type of the channel state information to the user equipment 102 from the start time of the Off Duration or the first time prior to the start time, so that in the scenario where the network device 101 is configured with the DRX, the reception of some uplink information can be skipped, and the sending of some downlink information can be saved, thereby further realizing the energy saving of the network device 101. Meanwhile, it is possible for the user equipment 102 to not receive the first type of the channel state information from the start time or the first time prior to the start time, which is beneficial to the energy saving of the user equipment102.

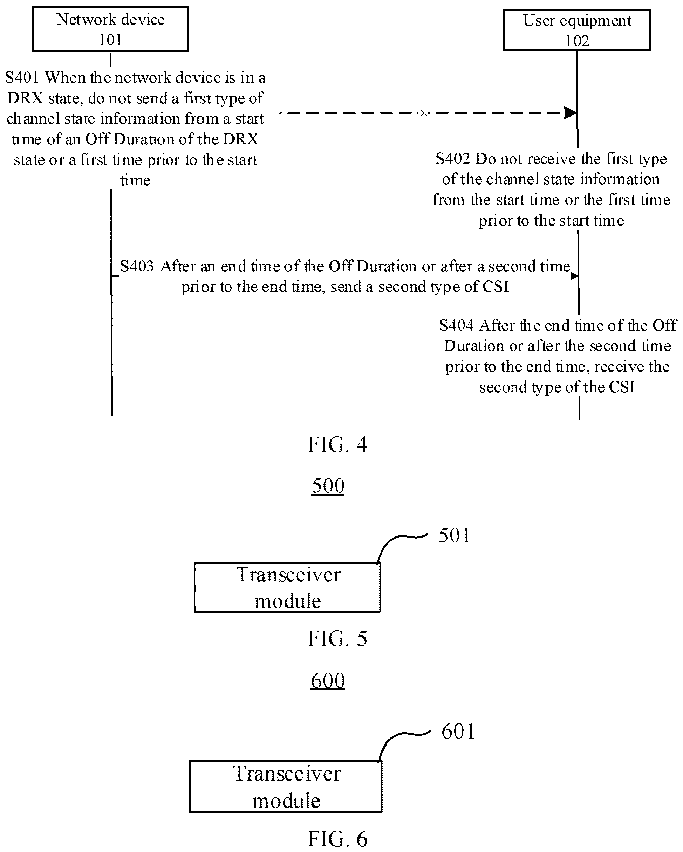

The embodiment of the disclosure provides a communication method. Referring to FIG. 4, FIG. 4 is a communication method according to an exemplary embodiment. As shown in FIG. 4, the method includes steps S401 to S404, which are specifically as follows.

In step S401, when a network device 101 is in a discontinuous reception (DRX) state, the network device 101 does not send a first type of channel state information to a user equipment 102 from a start time of an Off Duration of the DRX state or a first time prior to the start time.

In some possible implementations, referring to FIG. 3, the start time of the Off Duration is t2, and the first time prior to the start time t2 is t0.

In some possible implementations, the start time is separated from the first time by a first duration, and the first duration is related to a measurement duration of a reference signal.

In some possible implementations, the first type of the channel state information is at least one of the following:
a CSI-RS;
a CSI-IM resource;
a TRS;
a CSI-RS associated with a periodic CSI measurement report;
a CSI-IM resource associated with the periodic CSI measurement report;
a CSI-RS associated with a semi-persistent CSI measurement report; and
a CSI-IM resource associated with the semi-persistent CSI measurement report.

In some possible implementations, the network device 101 does not send the first type of the channel state information to the user equipment 101 from the start time or the first time, for example, stopping or terminating sending the first type of the channel state information from the start time or the first time.

In step S402, the user equipment 102 does not receive the first type of the channel state information from the start time of the Off Duration of the network device 101 in the DRX state or the first time prior to the start time.

In step S403, after the end time of the Off Duration or after a second time prior to the end time, the network device 101 sends a second type of the CSI to the user equipment 102, where the second type of the CSI is a part or all of the first type of the channel state information.

In some possible implementations, after the end time or the second time, the network device 101 may resume sending a part or all of the first type of the channel state information.

In some possible implementations, the second type of the CSI is at least one of:
a CSI-RS;
a CSI-IM resource;
a TRS;
a CSI-RS associated with a periodic CSI measurement report;
a CSI-IM resource associated with the periodic CSI measurement report;
a CSI-RS associated with a semi-persistent CSI measurement report; and
a CSI-IM resource associated with the semi-persistent CSI measurement report.

In some possible implementations, the end time is separated from the second time by a second duration, and the second duration is related to the measurement duration of the reference signal.

For example, the second duration T2 adopts the measurement duration corresponding to the CSI measurement defined in the protocol.

In an example, referring to FIG. 3, the network device 101 stops sending the first type of the CSI, such as the CSI-RS and/or CSI-IM resource, from the start time t2 of the Off Duration. After the end time t3 of the Off Duration, the network device 101 resumes sending the second type of the CSI, such as sending the CSI-RS and/or CSI-IM resource.

In an example, referring to FIG. 3, when the DRX mechanism of the network device 101 is a semi-static configuration, the network device 101 may inform the user equipment 102 of configuration information of the DRX through signaling, so that both the network device 101 and the user equipment 102 can know the start time and end time of the DRX cycle in advance, such as the start time t2 and the end time t3 of the Off Duration. In a scenario where the DRX mechanism of the network device 101 is dynamically indicated, the network device 101 may inform the user equipment 102 of the DRX information, such as the start time t2 and the end time t3 of the Off Duration, through dynamic physical signaling (such as DCI), so that both the network device 101 and the user equipment 102 can know the end time of the DRX Off Duration in advance.

It can be understood that, in the scenario of dynamic indication, the user equipment 102 can only know the start time and end time of the Off Duration after receiving the DCI of the network device 101. At this time, the Off Duration may have already started, so the end time learned by the user equipment 102 at this time is more referential.

In this example, the network device 101 does not send the CSI-RS and/or CSI-IM resource from time t0 prior to the start time t2 of the Off Duration by the first duration T1. After a time t0' of the second duration T2 prior to the end time t3, the network device 101 resumes sending the CSI-RS and/or CSI-IM resource.

In this example, the second duration T2 may be defined to meet the measurement duration requirement. For example, for a CSI measurement report with the sending moment at the end time t3 or after t3, taking the end time t3 as an example for explanation, before obtaining the CSI measurement report, the user equipment 102 needs to perform the CSI measurement for the second duration before the end time t3 to meet the requirement of the measurement duration and the sampling points, so as to report the CSI measurement report on time at the end time t3.

In one possible example, for the CSI measurement report configured or indicated to be sent on slot n, i.e., the sending moment of the CSI measurement report is configured or indicated to be on slot n, assuming that slot n is not within the Off Duration of DRX, the network device 101 sends the CSI-RS and/or CSI-IM resource associated with the CSI measurement report from the time (slot n-T2) prior to slot n by the second duration T2. (slot n-T2) is within the DRX Off Duration.

In some possible implementations, when the first type of the channel state information includes the CSI-RS associated with the semi-persistent CSI measurement report and/or the CSI-IM resource associated with the semi-persistent CSI measurement report, the second type of the CSI does not include at least one of the following:
a CSI-RS associated with the semi-persistent CSI measurement report and unassociated with the periodic CSI measurement report;
a CSI-IM resource associated with the semi-persistent CSI measurement report and unassociated with the periodic CSI measurement report.

In an example, referring to FIG. 3, for the CSI-RS and/or CSI-IM resource associated with the semi-persistent CSI measurement report that the network device 101 terminates sending from the start time t2 of the Off Duration or the time t0 prior to the start time t2 by the first duration T1, it is considered that the configuration of the semi-persistent CSI measurement report is deactivated.

In this example, the configuration of the semi-persistent CSI measurement report is in a deactivated state, and the user equipment 101 will not resume the reporting of the semi-persistent CSI measurement report from the second time, such as the end time t3 of the Off Duration, and the network device 101 may not resume sending the CSI-RS and/or CSI-IM resource associated with the semi-persistent CSI measurement report.

Alternatively, in this example, the network device does not resume sending the CSI-RS and/or CSI-IM resource associated with the semi-persistent CSI measurement report from the second time, such as time t0' prior to the end time t3 by the second duration T2.

In an example, for the periodic CSI measurement report, the user equipment 102 may still report regularly after the Off Duration ends, and the network device 101 resumes sending the CSI-RS and/or CSI-IM resource associated with the periodic CSI measurement report. That is, the second type of the CSI includes: CSI-RS associated with the periodic CSI measurement report and/or the CSI-IM resource associated with the periodic CSI measurement report.

In step S404, after the end time of the Off Duration or after the second time prior to the end time, the user equipment 102 receives the second type of the CSI sent by the network device 101, where the second type of the CSI is a part or all of the first type of the channel state information.

In the embodiment of the present disclosure, it may be possible that the network device 101 does not send the first type of the channel state information to the user equipment 102 from the start time of the Off Duration or the first time prior to the start time, so that the energy saving of the network device 101 can be further realized under the scenario where the network device 101 is configured with DRX. Meanwhile, it may be possible that the user equipment 102 does not receive the first type of the channel state information from the start time or the first time, which is beneficial to the energy saving of the user equipment 102. In addition, from the end time of the Off Duration or the second time prior to the end time, the network device 101 may resume the sending of the second type of the CSI, and the user equipment 102 may resume the monitoring of the second type of the CSI, to realize timely communication.

Based on the same concept as the above method embodiments, the embodiments of the present disclosure also provide a network device 101, which is used for performing the steps performed by the network device 101 provided by the above embodiments.

In one possible implementation, the apparatus 500 shown in FIG. 5 may be used as the network device 101 involved in the above method embodiments, and performs the steps performed by the network device 101 in the above method embodiments.

The apparatus 500 includes a transceiver module 501, where the transceiver module 501 may be used to support a communication apparatus for communication.

The transceiver module 501 is configured to, when the network device is in a discontinuous reception (DRX) state, not send a first type of channel state information to a user equipment from a start time of an Off Duration of the DRX state or a first time prior to the start time.

Based on the same concept as the above method embodiments, the embodiments of the present disclosure also provide a user equipment 102, which is used for performing the steps performed by the user equipment 102 provided by the above embodiments.

In one possible implementation, the apparatus 600 shown in FIG. 6 may be used as the user equipment 102 involved in the above method embodiments, and perform the steps performed by the user equipment 102 in the above method embodiments.

The apparatus 600 includes a transceiver module 601, where the transceiver module 601 may be used to support a communication apparatus for communication.

The transceiver module 601 is configured to not receive a first type of channel state information from a start time of an Off Duration of a network device in a DRX state or a first time prior to the start time.

The embodiments of the disclosure also provide a communication apparatus including a processor and a memory, where,
the memory is configured to store a computer program;
the processor is configured to execute the computer program to realize the method performed by the network device 101.

The embodiments of the present disclosure also provide a computer-readable storage medium, in which an instruction is stored, and when the instruction is called for execution on a computer, the computer is caused to perform the method performed by the network device 101.

The embodiments of the disclosure also provide a communication apparatus including a processor and a memory, where,
the memory is configured to store a computer program;
the processor is configured to execute the computer program to realize the method performed by the user equipment 102.

The embodiments of the present disclosure also provide a computer-readable storage medium, in which an instruction is stored, and when the instruction is called for execution on a computer, the computer is caused to perform the method performed by the user equipment 102.

Those skilled in the art will easily think of other implementations of the embodiments of the present disclosure after considering the specification and practicing the contents disclosed herein. The present application is intended to cover any variations, uses or adaptations of the embodiments of the present disclosure, which follow the general principles of the embodiments of the present disclosure and include common knowledge or habitual technical means in the technical field not disclosed in the present disclosure. The specification and the embodiments are regarded as exemplary only, and the true scope and spirit of the embodiments of the present disclosure are indicated by the appended claims.

It should be understood that the embodiments of the present disclosure are not limited to the precise structure that has been described above and shown in the accompanying drawings, and are subject to various modifications and changes without departing from their scope. The scope of the embodiments of the present disclosure is limited only by the appended claims.

### INDUSTRIAL APPLICABILITY

In the methods of the present disclosure, it may be possible that the network device does not send the first type of the channel state information to the user equipment from the start time of the Off Duration or the first time prior to the start time, so that in the scenario where the network device is configured with the DRX, the reception of some uplink information can be skipped, and the sending of some downlink information can be saved, thereby further achieving energy saving of the network device.

## Claims

1. A communication method, performed by a network device, the method comprising:
when the network device is in a discontinuous reception (DRX) state, not sending a first type of channel state information (CSI) to a user equipment from a start time of an Off Duration of the DRX state or a first time prior to the start time.

2. The method according to claim 1, wherein the start time is separated from the first time by a first duration, and the first duration is related to a measurement duration of a reference signal.

3. The method according to claim 1, wherein the first type of the channel state information is at least one of:
a channel-state-information reference signal (CSI-RS);
a channel-state-information interference measurement (CSI-IM) resource;
a tracking reference signal (TRS);
a CSI-RS associated with a periodic CSI measurement report;
a CSI-IM resource associated with the periodic CSI measurement report;
a CSI-RS associated with a semi-persistent CSI measurement report; and
a CSI-IM resource associated with the semi-persistent CSI measurement report.

4. The method according to any one of claims 1 to 3, wherein the method further comprises:
sending a second type of CSI to the user equipment after an end time of the Off Duration or after a second time prior to the end time, wherein the second type of the CSI is a part or all of the first type of the channel state information.

5. The method according to claim 4, wherein the end time is separated from the second time by a second duration, and the second duration is related to a measurement duration of a reference signal.

6. The method according to claim 4 or 5, wherein when the first type of the channel state information comprises a CSI-RS associated with a semi-persistent CSI measurement report and/or a CSI-IM resource associated with the semi-persistent CSI measurement report, the second type of the CSI does not comprise at least one of:
a CSI-RS associated with the semi-persistent CSI measurement report and unassociated with a periodic CSI measurement report;
a CSI-IM resource associated with the semi-persistent CSI measurement report and unassociated with the periodic CSI measurement report.

7. A communication method, performed by a user equipment, the method comprising:
not receiving a first type of channel state information (CSI) from a start time of an Off Duration of a network device in a DRX state or a first time prior to the start time.

8. The method according to claim 7, wherein the start time is separated from the first time by a first duration, and the first duration is related to a measurement duration of a reference signal.

9. The method according to claim 7, wherein the first type of the channel state information is at least one of:
a CSI-RS;
a CSI-IM resource;
a TRS;
a CSI-RS associated with a periodic CSI measurement report;
a CSI-IM resource associated with the periodic CSI measurement report;
a CSI-RS associated with a semi-persistent CSI measurement report; and
a CSI-IM resource associated with the semi-persistent CSI measurement report.

10. The method according to any one of claims 7 to 9, wherein the method further comprises:
receiving a second type of CSI sent by the network device after an end time of the Off Duration or after a second time prior to the end time, wherein the second type of the CSI is a part or all of the first type of the channel state information.

11. The method according to claim 10, wherein the end time is separated from the second time by a second duration, and the second duration is related to a measurement duration of a reference signal.

12. The method according to claim 10 or 11, wherein when the first type of the channel state information comprises a CSI-RS associated with a semi-persistent CSI measurement report and/or a CSI-IM resource associated with the semi-persistent CSI measurement report, the second type of the CSI does not comprise at least one of:
a CSI-RS associated with the semi-persistent CSI measurement report and unassociated with a periodic CSI measurement report;
a CSI-IM resource associated with the semi-persistent CSI measurement report and unassociated with the periodic CSI measurement report.

13. A network device, comprising:
a transceiver module, configured to, when the network device is in a discontinuous reception (DRX) state, not send a first type of channel state information to a user equipment from a start time of an Off Duration of the DRX state or a first time prior to the start time.

14. A user equipment, comprising:
a transceiver module, configured to not receive a first type of channel state information from a start time of an Off Duration of a network device in a DRX state or a first time prior to the start time.

15. A communication apparatus, comprising a processor and a memory, wherein,
the memory is configured to store a computer program;
the processor is configured to execute the computer program to realize the method according to any one of claims 1 to 6.

16. A communication apparatus, comprising a processor and a memory, wherein,
the memory is configured to store a computer program;
the processor is configured to execute the computer program to realize the method according to any one of claims 7 to 12.

17. A computer-readable storage medium having an instruction stored therein, wherein when the instruction is called for execution on a computer, the computer is caused to perform the method according to any one of claims 1 to 6.

18. A computer-readable storage medium having an instruction stored therein, wherein when the instruction is called for execution on a computer, the computer is caused to perform the method according to any one of claims 7 to 12.

19. A communication system, comprising a network device and a user equipment, wherein
the network device is configured to perform the method according to any one of claims 1 to 6;
the user equipment is configured to perform the method according to any one of claims 7 to 12.
